# EUROPÄISCHE PATENTSCHRIFT

(11) **EP 4 364 399 B1**
(45) Veröffentlichungstag und Bekanntmachung des Hinweises auf die Patenterteilung: **21.05.2025**
(21) Anmeldenummer: 22743760.5
(22) Anmeldetag: 29.06.2022
(51) Int. Cl.: H04N 1/401, H04N 1/60

(54) **VERFAHREN ZUR FARBKORREKTUR EINES DIGITALDRUCKERS**
METHOD FOR COLOUR CORRECTION OF DIGITAL PRINTER
PROCÉDÉ DE CORRECTION COLORIMÉTRIQUE D'UNE IMPRIMANTE NUMÉRIQUE

(30) Priorität: 30.06.2021 EP 21182847
(43) Veröffentlichungstag der Anmeldung: 08.05.2024
(73) Patentinhaber: Akzenta Paneele + Profile GmbH, 56759 Kaisersesch (DE)
(72) Erfinder: KLEMM, Markus, 33619 Bielefeld (DE); LINNENBRÜGGER, Timo, 56812 Cochem (DE); HANNIG, Hans-Jürgen, 51427 Bergisch Gladbach (DE)
(74) Vertreter: Michalski Hüttermann & Partner Patentanwälte mbB
(86) Internationale Anmeldenummer: PCT/EP2022/067899
(87) Internationale Veröffentlichungsnummer: WO 2023/275144

(56) Entgegenhaltungen:
- EP-A2- 2 623 324
- DE-A1- 102016 224 303
- DE-B3- 102015 106 770

## Beschreibung

Die vorliegende Erfindung betrifft ein Verfahren zur Farbkorrektur eines Digitaldruckers.

Eine Vorrichtung zur Durchführung des Verfahrens und eine Verwendung des Verfahrens sind offenbart aber nicht beansprucht.

Verfahren zur Farbkorrektur von Digitaldruckern sind an sich bekannt. Dabei werden Abweichungen von dem erwarteten Druckergebnis ermittelt und beim Druck derart berücksichtigt, dass der Druck mehr dem erwarteten Druckergebnis entspricht.

Ein großes Problem bei der Ausgabe von Digitalbildern sind die durch Druckartefakte hervorgerufenen Farb- und Dichteunterschiede über die Druckbreite eines Druckers, welche besonders bei gleicher Farbe ("Unifarbe") häufig als Streifenbildung in Druckrichtung sichtbar werden. Die Gründe hierfür sind vielfältiger Natur, z.B. ist die Druckpunktgröße (Tropfengröße bei InkJet) über die gesamte Breite eines Druckkopfes und von Druckkopf zu Druckkopf niemals exakt gleich groß. Weiterhin unterliegt die Positionsgenauigkeit eines jeden Druckpunktes unterschiedlich großen Toleranzen und verändert somit den ursprünglich durch das Rippen gewünschten Tonwert. Weiterhin kann speziell im InkJet-Druck auf dem Substrat sich niederlegender Sprühnebel die jeweilig gewünschten Farb- und Dichtewerte verändern. Speziell im InkJet-Druck kann ein unterschiedliches Verlaufsverhalten, speziell auf nicht saugenden Materialien, aufgrund unterschiedlicher Position von Druckköpfen in Laufrichtung und deren Abstand zum Pinning oder zur Endtrocknung die Druckdichte ungünstig verändern. Weiterhin können speziell im InkJet-Druck Druckaussetzer (Nozzlefehler) das Druckresultat visuell negativ beeinflussen.

Um diese Druckartefakte bezüglich Position und Stärke zu ermitteln, werden bekannterweise Testbilder gedruckt und analysiert. Die daraus gewonnenen Informationen können dann auf vielfältige Art zu Korrektur benutzt werden. Offenlegungsschrift DE 10 2016 224 303 A1 offenbart in diesem Zusammenhang ein Düsentestmuster für eine Inkjet-Druckmaschine, welches zusätzlich zu einem ersten Element ein zweites Element mit Streifen unterschiedlicher Flächendeckung enthält.

Ein Problem in Bezug auf diese Art der Korrekturdatenermittlung ist jedoch, dass die daraus erzielbaren Resultate oft nicht ausreichend sind. Insbesondere wird die durch die Korrektur erzielte Homogenität in den Einzelfarben zum Teil beim Zusammendruck nicht gleichermaßen erreicht. Dies stellt insbesondere beim Druck von im wesentlichen unifarbenen Bildern in großes Problem dar, weil verbleibende Abweichungen besonders stark auffallen und zu gut sichtbaren Streifen in Druckrichtung führen.

Verfahren zur Farbkorrektur von Digitaldruckern können somit noch Verbesserungspotential bieten. Verbesserungspotential kann sich insbesondere in der Farbkorrektur für im wesentlichen unifarbene Drucke bieten, sowie in der Reduzierung von Streifenbildung in Druckrichtung.

Es ist daher die Aufgabe der vorliegenden Erfindung, ein verbessertes Verfahren zur Farbkorrektur von Digitaldruckern bereitzustellen.

Gelöst wird diese Aufgabe durch das Verfahren zur Farbkorrektur eines Digitaldruckers gemäß Anspruch 1.

Bevorzugte Ausgestaltungen der Erfindung sind in den Unteransprüchen angegeben.

Aspekte der Erfindung betreffen ein Verfahren zur Farbkorrektur eines Digitaldruckers über eine Druckbreite des Digitaldruckers, wobei der Digitaldrucker zur Ausgabe eines vorgegebenen Digitalbildes vorgesehen ist, wobei das Verfahren die Schritte aufweist:
a) Bereitstellen des vorgegebenen Digitalbildes, wobei das Digitalbild zumindest ein Farbkanalbild aufweist, wobei jedes Farbkanalbild einem Druckfarbkanal des Digitaldruckers zugeordnet ist;
b) Bestimmen von zumindest einer Testfarbe des vorgegebenen Digitalbildes;
c) Erstellen eines digitalen Testbildes, wobei das digitale Testbild mit zumindest einem unifarbenen Teststreifen versehen wird, der dazu vorgesehen ist über die Druckbreite des Digitaldruckers gedruckt zu werden, wobei jeder unifarbene Teststreifen über eine Druckdichte von zumindest einem Druckfarbkanal des Digitaldruckers nach folgenden Schritten definiert wird:
   i) Ermitteln einer zum Drucken der Testfarbe vorgesehenen Druckdichte von zumindest einem Druckfarbkanal des Digitaldruckers, und
   ii) Bestimmen der in Schritt i) ermittelten Druckdichte als Druckdichte des unifarbenen Teststreifens;
d) Drucken des digitalen Testbildes mit dem Digitaldrucker;
e) Erfassen der Farbwerte des gedruckten Testbildes in Abhängigkeit ihrer Position in Richtung der Druckbreite mit einem optischen Farbmessgerät;
f) Erstellen von Korrekturdaten für den Digitaldrucker anhand der erfassten Farbwerte; und
g) Anwenden der Korrekturdaten auf den Digitaldrucker und/oder das vorgegebene Digitalbild.

Unter einem Digitaldrucker wird im Sinne der vorliegenden Erfindung insbesondere eine Vorrichtung verstanden, die farbige Druckpunkte auf einem Substrat ausgeben kann, die das entsprechende Bild ausbilden.

Unter einem Digitalbild wird im Sinne der vorliegenden Erfindung insbesondere ein digital speicherbares Bild verstanden, dessen Bildinformationen über Bildpunkte bestimmt sind, die jeweils einen Farbwert bezüglich eines Farbsystems aufweisen. Ein vorgegebenes Digitalbild ist im Sinne der vorliegenden Erfindung ein Digitalbild das zum Drucken vorgesehen ist.

In Schritt a) des Verfahrens wird also das vorgegebene Digitalbild bereitgestellt, wobei das Digitalbild zumindest ein Farbkanalbild aufweist, wobei jedes Farbkanalbild einem Druckfarbkanal des Digitaldruckers zugeordnet ist.

Unter einem Farbkanalbild ist im Sinne der vorliegenden Erfindung insbesondere ein Teil des Digitalbildes zu verstehen der nur die Informationen zu einem Farbkanal des Farbsystems aufweist in dem das Digitalbild gespeichert ist. Beispielsweise kann das Digitalbild über Farbwerte im CMYK Farbsystem definiert sein und ein Farbkanalbild weist beispielsweise nur die Farbwerte des C-Farbkanals auf.

Unter einem Druckfarbkanal ist im Sinne der vorliegenden Erfindung insbesondere ein Farbkanal zu verstehen, in dem der Drucker drucken kann. Beispielsweise kann der Drucker zum Drucken im CMYK Farbsystem vorgesehen sein und ein Druckfarbkanal kann der C-Farbkanal sein.

Es ist also in anderen Worten insbesondere vorgesehen, dass das Digitalbild aus solchen Farbkanalbildern zusammengestellt ist, die den Druckfarbkanälen des Digitaldruckers entsprechen. Beispielsweise kann vorgesehen sein, dass das Digitalbild im CMYK Farbsystem über die Farbkanalbilder des C-Farbkanals und des M-Farbkanals bestimmt ist und der Drucker ein Drucker ist, der im CMYK Farbsystem drucken kann. Somit wird den Farbkanalbildern C und M des Digitalbildes jeweils der Druckfarbkanal C und M zugeordnet.

In Schritt b) des Verfahrens wird zumindest eine Testfarbe des vorgegebenen Digitalbildes bestimmt.

Unter einer Testfarbe des vorgegebenen Digitalbildes ist im Sinne der vorliegenden Erfindung eine Farbe des vorgegebenen Digitalbildes zu verstehen oder eine Farbe die einer derartigen Farbe ähnlich ist, die für das erfindungsgemäße Verfahren verwendet wird. Insbesondere ist unter einer Testfarbe des vorgegebenen Digitalbildes im Sinne der vorliegenden Erfindung ein Farbwert zu verstehen, der in dem Digitalbild vorkommt oder einem Farbwert des vorgegebenen Digitalbildes ähnlich ist. Unter einer ähnlichen Farbe oder einem ähnlichen Farbwert ist im Sinne der vorliegenden Erfindugn eine Farbe oder ein Farbwert zu verstehen, der einen bestimmten Delta E-Wert zu der Farbe oder dem Farbwert zu dem dieser ähnlich sein soll nicht überschreitet, also einen bestimmten Farbabstand nicht überschreitet.

Bevorzugt kann vorgesehen sein, dass die in Schritt b) bestimmte Testfarbe eine Hauptfarbe des vorgegebenen Digitalbildes ist.

Unter einer Hauptfarbe des vorgegebenen Digitalbildes ist im Sinne der vorliegenden Erfindung insbesondere ein Farbwert zu verstehen, der einen wesentlichen Anteil am Digitalbild hat.

Weiter in Schritt c) wird ein digitales Testbild erstellt, wobei das digitale Testbild mit zumindest einem unifarbenen Teststreifen versehen wird, der dazu vorgesehen ist über die Druckbreite des Digitaldruckers gedruckt zu werden, wobei jeder unifarbene Teststreifen über eine Druckdichte von zumindest einem Druckfarbkanal des Digitaldruckers nach folgenden Schritten definiert wird:
i) Ermitteln einer zum Drucken der Testfarbe vorgesehenen Druckdichte von zumindest einem Druckfarbkanal des Digitaldruckers, und
ii) Bestimmen der in Schritt i) ermittelten Druckdichte als Druckdichte des unifarbenen Teststreifens.

Unter einem digitalen Testbild ist im Sinne der vorliegenden Erfindung ein Digitalbild zu verstehen.

Unter einem unifarbenen Teststreifen ist im Sinne der vorliegenden Erfindung insbesondere ein Bereich des digitalen Testbildes zu verstehen, der einen einzelnen Farbwert aufweist und sich quer zur Druckrichtung des Digitaldruckers erstreckt.

Darunter, dass jeder unifarbene Teststreifen über eine Druckdichte von zumindest einem Druckfarbkanal des Digitaldruckers bestimmt wird, ist im Sinne der vorliegenden Erfindung insbesondere zu verstehen, dass der unifarbene Teststreifen einen Farbwert aufweist, der wie das vorgegebene Digitalbild, über die Farbkanäle definiert ist, die den Druckfarbkanälen des Digitaldruckers entsprechen. Entsprechend kann der Teststreifen zumindest über einen Farbkanal definiert sein der einem Druckfarbkanal des Digitaldruckers entspricht und maximal über alle Farbkanäle die den Druckfarbkanälen des Digitaldruckers entsprechen.

Unter einer Druckdichte ist im Sinne der vorliegenden Erfindung die Kombination einer Druckpunktdichte und Druckpunktgröße zu verstehen. Die Druckdichte kann im Sinne der vorliegenden Erfindung entsprechend als Farbsättigung wahrnehmbar sein.

Die Druckdichte kann im Sinne der vorliegenden Erfindung auch einem Farbwert bei einem gedruckten Bild entsprechen und kann entsprechend analog gemessen werde. Beispielsweise kann die Druckdichte mit einem Spektralphotometer gemessen werden. Alternativ kann die Druckdichte mit einem Scanner gemessen werden, beispielsweise einem RGB Scanner. Dabei kann bevorzugt vorgesehen sein, dass die Druckdichte über den Wert einer gemessenen Komplementärfarbe ermittelt wird. Vorteile ergeben sich dadurch aus der Kombination von RGB Scanner mit CMYK Drucker und den erfindungsgemäß erstellten unifarbenen Teststreifen.

Es wird also insbesondere die Druckdichte ermittelt, die zum Drucken der Testfarbe vorgesehen ist, wobei die Druckdichte von zumindest einem Druckfarbkanal des Digitaldruckers bestimmt wird. Diese Druckdichte wird dann als Druckdichte des unifarbenen Teststreifens bestimmt.

Es kann somit beispielsweise vorgesehen sein, dass die Testfarbe über drei Farbkanäle definiert ist, beispielsweise über CMY-Farbkanäle, wobei der Drucker die Druckfarbkanäle CMYK aufweist, und die Druckdichte des C-Farbkanals der Testfarbe in Schritt i) ermittelt wird und als Druckdichte des unifarbenen Teststreifens in Schritt ii) festgelegt wird. Alternativ kann beispielsweise die Druckdichte des C- und M-Farbkanals der Testfarbe ermittelt werden und als Druckdichte des unifarbenen Teststreifens festgelegt werden.

In Schritt d) wird das digitale Testbild dann mit dem Digitaldrucker gedruckt.

In Schritt e) werden die Farbwerte des gedruckten Testbildes in Abhängigkeit ihrer Position in Richtung der Druckbreite mit einem optischen Farbmessgerät erfasst.

Darunter ist im Sinne der vorliegenden Erfindung insbesondere zu verstehen, dass mit dem optischen Farbmessgerät die Farbe des gedruckten Testbildes über die Druckbreite erfasst wird und jeweils einer Position über die Druckbreite ein entsprechend an dieser Stelle gemessener Farbwert zugeordnet wird.

In Schritt f) werden Korrekturdaten für den Digitaldrucker anhand der erfassten Farbwerte erstellt.

In Schritt g) werden die Korrekturdaten auf den Digitaldrucker und/oder das vorgegebenen Digitalbild angewendet.

Darunter ist insbesondere zu verstehen, dass Korrekturdaten erstellt werden, indem Abweichungen von den mittels des optischen Farbmessgerätes bestimmten Farbwerten zu den erwarteten Farbwerten des digitalen Testbildes in Abhängigkeit ihrer Position in Richtung der Druckbreite bestimmt werden, und bei Anwendung der Korrekturdaten das vorgegebene Digitalbild und/oder der Digitaldrucker entsprechend verändert werden, um den bestimmten Abweichungen entgegenzusteuern.

Durch das vorbeschriebene Verfahren kann erreicht werden, dass sich für das vorgegebene Digitalbild Druckartefakte besonders gut reduzieren lassen, insbesondere Streifenbildung in Druckrichtung bei Digitalbildern mit einem hohen unifarbenen Anteil. Dadurch kann insbesondere erreicht werden, dass großflächige Dekore, wie beispielsweise Steindekore besonders präzise gedruckt werden können. Im Vergleich zu bekannten Verfahren zur Farbkorrektur eines Digitaldruckers lassen sich mit dem vorbeschriebenen Verfahren insbesondere auch Streifenbildungen reduzieren, die durch Abweichungen in der Druckpunktgröße (Tropfengröße bei InkJet) über die Breite eines Druckkopfes und zwischen Druckköpfen entstehen. Weiterhin lassen sich durch das vorbeschriebene Verfahren insbesondere Artefakte reduzieren, die insbesondere im InkJet-Druck durch auf dem Substrat sich niederlegenden Sprühnebel entstehen oder durch ein unterschiedliches Verlaufsverhalten, speziell auf nicht saugenden Materialien, aufgrund unterschiedlicher Position von Druckköpfen in Laufrichtung und deren Abstand zum Pinning oder zur Endtrocknung.

Bevorzugt kann vorgesehen sein, dass das Drucken des digitalen Testbildes mit dem Digitaldrucker in Schritt d) auf einem Drucksubstrat erfolgt, das das gleiche Drucksubstrat ist, auf dem auch das vorgegebene Digitalbild gedruckt werden soll.

Dadurch kann erreicht werden, dass insbesondere durch das Substrat hervorgerufene Effekte durch die Farbkorrektur korrigiert werden können.

Erfindungsgemäß ist vorgesehen,
dass zumindest ein unifarbener Teststreifen über die Druckdichte aller Druckfarbkanäle des Digitaldruckers definiert ist, wobei in Schritt i) die zum Drucken der Testfarbe vorgesehene Druckdichte aller Druckfarbkanäle des Digitaldruckers ermittelt wird; und/oder
zumindest ein unifarbener Teststreifen über die Druckdichte von einem einzelnen Druckfarbkanal des Digitaldruckers definiert ist, wobei in Schritt i) die zum Drucken der Testfarbe vorgesehene Druckdichte von einem einzelnen Druckfarbkanal des Digitaldruckers ermittelt wird; und/oder
zumindest ein unifarbener Teststreifen über die Druckdichte von mehr als einem und weniger als allen Druckfarbkanälen des Digitaldruckers definiert ist, wobei in Schritt i) die zum Drucken der Testfarbe vorgesehene Druckdichte von mehr als einem und weniger als allen Druckfarbkanälen des Digitaldruckers ermittelt wird.

Es kann also in einer bevorzugten Ausgestaltung vorgesehen sein, dass zumindest ein unifarbener Teststreifen über die Druckdichte aller Druckfarbkanäle des Digitaldruckers definiert ist, wobei in Schritt i) die zum Drucken der Testfarbe vorgesehene Druckdichte aller Druckfarbkanäle des Digitaldruckers ermittelt wird.

Darunter ist insbesondere zu verstehen, dass der unifarbene Teststreifen den gleichen Farbwert wie die Testfarbe aufweist.

Dadurch kann vorteilhafterweise erreicht werden, dass die Farbkorrektur im Zusammendruck aller für die Testfarbe verwendeten Farben über die Druckbreite erfolgen kann. Somit können insbesondere Artefakte reduziert werden, die im InkJet-Druck durch auf dem Substrat sich niederlegenden Sprühnebel entstehen oder durch ein unterschiedliches Verlaufsverhalten, speziell auf nicht saugenden Materialien, aufgrund unterschiedlicher Position von Druckköpfen in Laufrichtung und deren Abstand zum Pinning oder zur Endtrocknung.

Alternativ oder zusätzlich kann in einer bevorzugten Ausgestaltung vorgesehen sein, dass zumindest ein unifarbener Teststreifen über die Druckdichte von einem einzelnen Druckfarbkanal des Digitaldruckers definiert ist, wobei in Schritt i) die zum Drucken der Testfarbe vorgesehene Druckdichte von einem einzelnen Druckfarbkanal des Digitaldruckers ermittelt wird.

Dadurch kann vorteilhafterweise erreicht werden, dass insbesondere Artefakte reduziert werden können, die durch Abweichungen in der Druckpunktgröße (Tropfengröße bei InkJet) über die Breite eines Druckkopfes und zwischen Druckköpfen entstehen. Insbesondere kann dadurch erreicht werden, dass Artefakte, die auf einen einzelnen Druckfarbkanal zurückzuführen sind sicher identifiziert und korrigiert werden können.

Weiter alternativ oder zusätzlich kann in einer bevorzugten Ausgestaltung vorgesehen sein, dass zumindest ein unifarbener Teststreifen über die Druckdichte von mehr als einem und weniger als allen Druckfarbkanälen des Digitaldruckers definiert ist, wobei in Schritt i) die zum Drucken der Testfarbe vorgesehene Druckdichte von mehr als einem und weniger als allen Druckfarbkanälen des Digitaldruckers ermittelt wird.

Dadurch kann vorteilhafterweise erreicht werden, dass Artefakte, die aus dem Zusammendruck von weniger als allen Druckfarbkanälen entstehen, sicher identifiziert und korrigiert werden können.

In einer bevorzugten Ausgestaltung kann vorgesehen sein, dass das digitale Testbild jeweils zumindest einen der vorgenannten unifarbenen Teststreifen aufweist. Dadurch kann vorteilhafterweise erreicht werden, dass die Korrektur besonders erfolgreich ist. Ohne an eine Theorie gebunden zu sein, wird davon ausgegangen, dass sich durch die Kombination dieser Teststreifen erreichen lässt, dass die Quelle der Druckartefakte besonders sicher identifiziert werden kann, so dass sich eine Farbkorrektur erreichen lässt, die besonders gute und stabile Ergebnisse liefert.

Bevorzugt kann vorgesehen sein, dass in Schritt b) mehr als eine Testfarbe bestimmt wird und das digitale Testbild für jede bestimmte Testfarbe mit zumindest einem unifarbenen Teststreifen versehen wird.

Dadurch kann erreicht werden, dass bei mehrfarbigen vorgegebenen Digitalbildern eine Streifenbildung auch in Bereichen verschiedener Farbwerte reduziert werden kann.

Bevorzugt kann vorgesehen sein, dass das digitale Testbild für zumindest eine Testfarbe des vorgegebenen Digitalbildes mit zumindest zwei unifarbene Teststreifen versehen wird und bevorzugt die Anzahl der unifarbenen Teststreifen für die zumindest eine Testfarbe des vorgegebenen Digitalbildes kleiner oder gleich der Anzahl der Farbkanäle des Digitaldruckers ist,
wobei bevorzugt für die zumindest eine Testfarbe ein unifarbener Teststreifen über die Druckdichte von einem einzelnen Druckfarbkanal des Digitaldruckers definiert ist, ein unifarbener Teststreifen über die Druckdichte aller Druckfarbkanäle des Digitaldruckers definiert ist, und die optional restlichen unifarbenen Testreifen über die Druckdichte von mehr als einem und weniger als allen Druckfarbkanälen des Digitaldruckers definiert sind.

Dadurch kann erreicht werden, dass die Anzahl der Teststreifen gering gehalten werden kann, wodurch sich eine einfachere Berechnung der Korrekturdaten ergibt und zugleich eine ausreichende Anzahl an Farbkombinationen abgedeckt ist, um sehr gute Ergebnisse für die Farbkorrektur über die Druckbreite zu erzielen.

Bevorzugt kann vorgesehen sein, dass die Farbkanäle des Digitaldruckers eine Druckreihenfolge aufweisen, wobei der unifarbene Teststreifen, der über die Druckdichte von einem einzelnen Druckfarbkanal des Digitaldruckers definiert ist, über die Druckdichte des nach der Druckreihenfolge zuerst zu druckenden Druckfarbkanals definiert ist.

Dadurch kann erreicht werden, dass die Farbkorrektur bei der zuerst zu druckenden Farbe beginnt, wodurch ohne an eine Theorie gebunden zu sein, insbesondere eine weitere Korrektur vereinfacht wird, da eine Überlagerung verschiedener Effekte bei der Anwendung der Korrektur vermieden wird.

Bevorzugt kann vorgesehen sein, dass die unifarbenen Testreifen, die über die Druckdichte von mehr als einem und weniger als allen Druckfarbkanälen des Digitaldruckers definiert sind, so ausgewählt sind, dass
ein erster dieser unifarbenen Teststreifen über die Druckdichte des nach der Druckreihenfolge zuerst zu druckenden Druckfarbkanals definiert ist und zusätzlich über die Druckdichte des nach der Druckreihenfolge als nächstes zu druckenden Druckfarbkanals,
und optional jeder weitere dieser unifarbenen Teststreifen über die Druckdichte des jeweils vorherigen unifarbenen Testreifens definiert ist und zusätzlich über die Druckdichte des nach der Druckreihenfolge als nächstes zu druckenden Druckfarbkanals.

Dadurch kann erreicht werden, dass jeweils Druckfarbkanäle in den Teststreifen so kombiniert werden, dass jeweils nur ein Druckfarbkanal von einem ersten zu einem zweiten Teststreifen hinzukommt, so dass die Farbkorrektur besonders einfach und zuverlässig berechnet werden kann.

Beispielsweise kann besonders bevorzugt vorgesehen sein, dass zum Druck einer Testfarbe vier Druckfarbkanäle vorgesehen sind, beispielsweise CMYK, wobei die Druckfarbkanäle in der Reihenfolge C, M, Y und K gedruckt werden. Das digitale Testbild kann dann besonders bevorzugt vier unifarbene Teststreifen aufweisen, wobei der erste unifarbene Teststreifen über die zum Drucken der Testfarbe vorgesehene Druckdichte des C-Druckfarbkanals definiert ist, der zweite unifarbene Teststreifen über die zum Drucken der Testfarbe vorgesehen Druckdichte des C- und M-Druckfarbkanals definiert ist, der dritte unifarbene Teststreifen über die zum Drucken der Testfarbe vorgesehene Druckdichte des C-, M- und Y-Druckfarbkanals definiert ist, und der vierte unifarbene Teststreifen über die zum Drucken der Testfarbe vorgesehene Druckdichte aller Druckfarbkanäle CMYK definiert ist. Insbesondere kann beispielsweise vorgesehen sein, dass mehrere Testfarben des vorgegebenen Digitalbildes bestimmt wurden und die vorbeschriebenen unifarbenen Teststreifen jeweils für jede Testfarbe bestimmt werden.

Dadurch kann erreicht werden, dass mit einer besonders geringen Anzahl an Teststreifen sowohl Artefakte, die durch einzelne Druckkopfreihen entstehen, als auch Artefakte, die durch den Zusammendruck mehrerer Farben entstehen, durch die Farbkorrektur ausgeglichen werden können. Insbesondere kann dadurch erreicht werden, dass die Farbkorrektur zuverlässig und zielsicher diese Artefakte berücksichtigt, ohne komplizierte Rechenverfahren nutzen zu müssen um die Effekte auseinanderzurechnen.

Erfindungsgemäß ist vorgesehen, dass die Testfarben ausgewählt werden aus den am häufigsten im vorgegebenen Digitalbild vorkommenden Farben, wobei optional zwischen mehreren Testfarben ein Mindestabstand im Farbraum eingehalten wird.

Dadurch kann erreicht werden, dass mit wenigen Testfarben eine zuverlässige Farbkorrektur erreicht werden kann. Mindestabstände im Farbraum können beispielsweise über einen Delta E-Werte oder mit Hilfe eines Histogramms erreicht werden.

Bevorzugt kann vorgesehen sein, dass die Schritte d) bis g) iterativ mehrfach nacheinander durchgeführt werden.

Dadurch kann erreicht werden, dass die Farbkorrektur ein besonders homogenes Druckergebnis erreicht. Es versteht sich, dass bei einem iterativen Vorgehen, wobei in Schritt g) eine Anwendung der Korrekturdaten auf das vorgegebene Digitalbild vorgesehen ist, die Korrekturdaten entsprechend auf das digitale Testbild angewendet werden.

Besonders bevorzugt kann vorgesehen sein, dass die Schritte d) bis g) iterativ durchgeführt werden, bis das Ergebnis der Korrektur gut genug ist. Insbesondere können die Schritte d) bis g) so lange durchgeführt werden, bis die in Schritt e) erfassten Farbwerte ausreichend homogen über die Druckbreite sind bzw. die in Schritt f) ermittelten Korrekturwerde ausreichend klein sind.

Optional kann der Erfolg des Verfahrens überprüft werden, wobei mit den entsprechend angewendeten Korrekturdaten das vorgegebene Digitalbild gedruckt wird.

Bevorzugt kann vorgesehen sein, dass das optische Farbmessgerät ausgewählt ist aus der Gruppe bestehend aus einem Farbsensor, einem Kolorimeter, einem Spektralphotometer, einer Digitalkamera oder einem Spektraldensitometer, wobei das optische Farbmessgerät vorzugsweise auf dem gleichen Farbmodell wie der Digitaldrucker beruht.

In einer bevorzugten Ausgestaltung kann vorgesehen sein, dass das Farbmessgerät nur relative Farbabweichungen über die Druckbreite misst und/oder die Korrekturdaten für den Digitaldrucker nur relative Farbabweichungen über die Druckbreite berücksichtigt.

In anderen Worten kann vorgesehen sein, dass die Farbkorrektur nicht die Abweichung der gedruckten unifarbenen Teststreifen von der zu erwartenden Farbe misst, sondern nur Farbschwankungen der gedruckten unifarbenen Teststreifen über die Druckbreite. Dadurch kann erreicht werden, dass die Farbkorrektur besonders effizient Druckartefakte ausgleicht, ohne durch die Farbtreue des Druckes an sich eingeschränkt zu werden.

Bevorzugt kann vorgesehen sein, dass schritt e) optional mehrfach hintereinander mit unterschiedlichen Einstellungen des optischen Farbmessgerätes durchgeführt wird, insbesondere bei verschiedenen Lichtverhältnissen und/oder Belichtungszeiten.

Dadurch kann erreicht werden, dass auch nur sehr geringe Schwankungen in der Farbe der gedruckten Teststreifen erkannt werden können.

In einer bevorzugten Ausgestaltung kann vorgesehen sein, dass das Testbild Positionierhilfen aufweist. Dadurch kann erreicht werden, dass das Erfassen der Farbwerte in Schritt e) besonders genau mit der Druckbreite korreliert werden kann, wodurch die Farbkorrektur besonders genau vonstattengehen kann.

Es kann vorgesehen sein, dass die Teststreifen verschiedene Dicken in Druckrichtung aufweisen, wobei die Dicken praktischerweise so gewählt sein können, dass die Teststreifen von dem Verwendeten optischen Farbmessgerät gut erfasst werden können. Ferner kann vorgesehen sein, dass die Teststreifen über die gesamte Druckbreite des Digitaldruckers verlaufen. Dadurch kann insbesondere eine Farbkorrektur über die gesamte Druckbreite erfolgen. Alternativ können die Teststreifen auch nur für Abschnitte der Druckbreite vorgesehen sein, beispielsweise für Abschnitte über die Breite des optischen Farbmessgerätes oder die Breite einzelner Druckköpfe. Dadurch kann das Verfahren an die spezifischen Gegebenheiten des Druckers und des Farbmessgerätes angepasst werden.

Bevorzugt kann vorgesehen sein, dass in Schritt g) die Korrekturdaten auf den Drucker angewendet werden, wobei insbesondere die Korrektur über eine Anpassung der Druckkopfelektronik erfolgt.

Bevorzugt kann vorgesehen sein, dass in Schritt g) die Korrekturdaten auf das vorgegebene Digitalbild angewendet werden, wobei insbesondere die Korrektur über eine Anpassung von Druckpunkten der Farbkanalbilder des vorgegebenen Digitalbildes erfolgt.

Indem die Korrekturdaten auf das vorgegebene Digitalbild angewendet werden kann vorteilhafterweise erreicht werden, dass der optimale Arbeitspunkt der Druckköpfe nicht verändert werden muss. Dadurch kann erreicht werden, dass die Anwendung der Korrekturdaten keine anderen Nachteile beim Druckprozess hervorruft. Indem die Korrektur über eine Anpassung der jeweiligen Farbkanalbilder erfolgt kann vorteilhafterweise erreicht werden, dass im Vergleich zur einer Anwendung der Korrekturdaten auf das vorgegebene Digitalbild als solches keine Korrekturartefakte zwischen Farbkanälen auftreten. Somit kann eine besonders farbgetreue Farbkorrektur erreicht werden. Zudem kann dadurch, dass die Druckpunkte angepasst werden, insbesondere erreicht werden, dass die Korrektur für Bereiche mit geringer und mit starker Korrektur gleichermaßen gut ist, wodurch sich eine besonders homogene Korrektur erreichen lässt.

Bevorzugt kann vorgesehen sein, dass bei der Anwendung der Korrekturdaten auf das vorgegebene Digitalbild Korrekturdaten auf die einzelnen Farbkanalbilder des vorgegebenen Digitalbildes angewandt werden, wobei insbesondere Korrekturdaten nur dann angewendet werden, wenn das jeweilige Rasterverfahren einen Druckpunkt an der jeweiligen Bildstelle des Farbkanalbildes vorsieht. Wenn für einen Farbdruckkanal das Farbkanalbild an einer Stelle keinen Druckpunkt vorsieht, wird demnach auch keine Korrektur dieses Farbkanals auf diese Stelle angewendet. Es kann bevorzugt vorgesehen sein, dass die Korrektur über eine Anpassung der Druckpunkte der Farbkanalbilder des vorgegebenen Digitalbildes, bei der Erstellung der Druckpunkte erfolgt oder nachdem die Druckpunkte erstellt wurden.

Bevorzugt kann vorgesehen sein, dass das Farbmodell des vorgesehenen Digitalbildes ausgewählt ist aus RGB, CMY und CMYK, wobei das Farbmodell insbesondere CMYK ist.

Es wird ferner eine Vorrichtung vorgeschlagen, aufweisend einen Datenspeicher, eine Recheneinheit, einen Digitaldrucker zur Ausgabe eines vorgegebenen Digitalbildes und ein optisches Farbmessgerät, wobei die Vorrichtung dazu eingerichtet ist das vorbeschriebene Verfahren durchzuführen.

Es wird ferner eine Verwendung des vorbeschriebenen Verfahrens oder der vorbeschriebenen Vorrichtung vorgeschlagen, wobei das Verfahren oder die Vorrichtung zur Farbkorrektur für den Druck von Dekoren verwendet wird, insbesondere für den Druck von Dekoren mit geringer Farbvielfalt, beispielsweise für Holz- und/oder Steindekore.

Es konnte überraschenderweise gezeigt werden, dass sich das vorbeschriebene Verfahren besonders gut für die Farbkorrektur bei solchen Anwendungen eignet. Insbesondere können bei derartigen Dekoren Streifen besonders gut erkannt werden, so dass eine besonders gute Farbkorrektur für qualitativ hochwertige Drucke erforderlich ist.

Weitere Vorteile und vorteilhafte Ausgestaltungen des erfindungsgemäßen Verfahrens, der erfindungsgemäßen Vorrichtung und der erfindungsgemäßen Verwendung werden durch die Figuren veranschaulicht und in der nachfolgenden Beschreibung erläutert. Dabei ist zu beachten, dass die Figuren nur beschreibenden Charakter haben und nicht dazu gedacht sind, die Erfindung in irgendeiner Form einzuschränken.

Es zeigen
Fig. 1 schematisch den Ablauf des erfindungsgemäßen Verfahrens nach einer bevorzugten Ausgestaltung, und
Fig. 2 schematisch ein Testbild, wie es in einer Ausgestaltung des erfindungsgemäßen Verfahrens als digitales Testbild erstellt bzw. ausgedruckt wird.

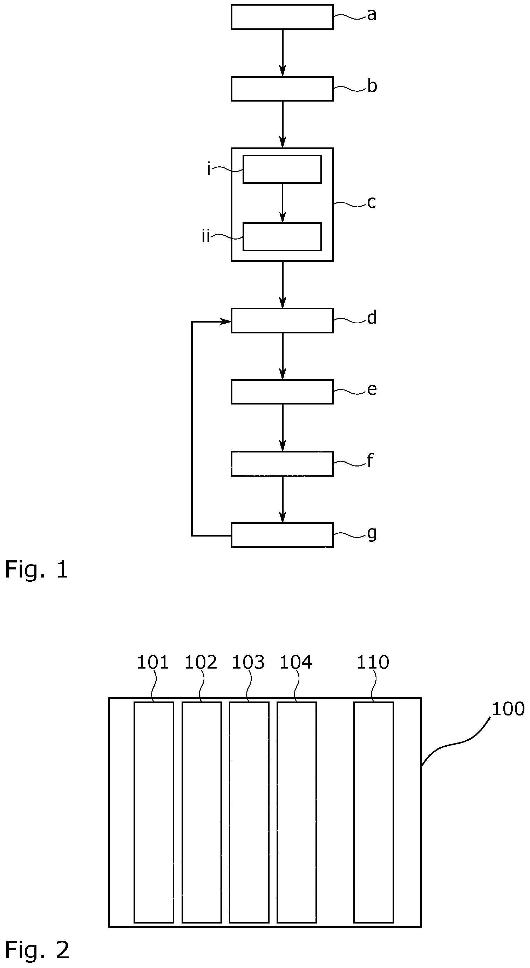

Fig. 1 zeigt schematisch den Ablauf des erfindungsgemäßen Verfahrens nach einer bevorzugten Ausgestaltung. In Schritt a) wird zunächst ein vorgegebenes Digitalbild bereitgestellt, welches dazu vorgesehen ist auf einem Digitaldrucker gedruckt zu werden. Beispielsweise handelt es sich bei dem Digitaldrucker um einen InkJet-Drucker mit den vier Druckfarbkanälen CMYK, welche in der Reihenfolge Y, M, C und K gedruckt werden. Bei dem vorgegebenen Digitalbild handelt es sich beispielsweise um ein Steindekor, welches dazu vorgesehen ist auf ein Dekorpaneel gedruckt zu werden. Das Digitalbild ist entsprechend zusammengesetzt aus vier Farbkanalbildern, die den vier Druckfarbkanälen CMYK des Digitaldruckers zugeordnet sind.

In Schritt b) wird nun zumindest eine Testfarbe des vorgegebenen Digitalbildes bestimmt. Beispielsweise werden zwei Testfarben bestimmt, indem die in dem Digitalbild vorkommenden Farbwerte in einem Histogramm nach Häufigkeit aufgestellt werden. Als Testfarben werden die zwei häufigsten Farben bestimmt, wobei darauf geachtet wird, dass die Farben einen gewissen Mindestabstand im Farbraum aufweisen. Beispielsweise besteht eine Testfarbe aus 5% Cyan, 7% Magenta, 4% Gelb und 16% Schwarz und eine zweite Testfarbe aus 8% Cyan, 3% Magenta, 5% Gelb und 12% Schwarz.

In Schritt c) wird nun ein digitales Testbild 100 erstellt, wobei ein beispielhaftes Testbild schematisch in Fig. 2 dargestellt ist. Hierfür wird das digitale Testbild 100 mit zumindest einem unifarbenen Testreifen 101, 102, 103, 104, 110 versehen. Beispielsweise wird das Testbild 100 für die erste Testfarbe mit insgesamt vier unifarbenen Teststreifen 101, 102, 103, 104, also mit so vielen Teststreifen wie Druckfarbkanäle vorhanden sind. Für die erste Testfarbe wird beispielsweise in Schritt i) für den ersten unifarbenen Teststreifen 101 die zum Drucken der Testfarbe vorgesehene Druckdichte von einem Druckfarbkanal des Digitaldruckers ermittelt. Beispielsweise wird der nach der Druckreihenfolge als erstes zu druckende Druckfarbkanal verwendet. Nach dem vorliegenden Beispiel wird also die Druckdichte des Y Druckfarbkanals der ersten Testfarbe, also 4% Gelb, ermittelt und in Schritt ii) als Druckdichte des ersten unifarbenen Teststreifens 101 bestimmt. Für den zweiten unifarbenen Teststreifen der ersten Testfarbe 102 wird in Schritt i) beispielsweise die zum Drucken der Testfarbe vorgesehene Druckdichte der der Druckreihenfolge nach als erstes und als zweites zu druckenden Druckfarbkanäle ermittelt und in Schritt ii) als Druckdichte des unifarbenen Teststreifens bestimmt. In anderen Worten wird nach dem vorliegenden Beispiel also die Druckdichte des Y Druckfarbkanals und des M Druckfarbkanals der ersten Testfarbe, also 4% Gelb und 7% Magenta, als Druckdichte des zweiten unifarbenen Teststreifens 102 bestimmt. Für den dritten unifarbenen Teststreifen der ersten Testfarbe 103 wird in Schritt i) beispielsweise die zum Drucken der Testfarbe vorgesehene Druckdichte der der Druckreihenfolge nach als erstes, zweites und drittes zu druckenden Druckfarbkanäle ermittelt und in Schritt ii) als Druckdichte des unifarbenen Teststreifens bestimmt. In anderen Worten wird nach dem vorliegenden Beispiel also die Druckdichte des Y Druckfarbkanals, des M Druckfarbkanals und des C Druckfarbkanals der ersten Testfarbe, also 4% Gelb, 7% Magenta und 5% Cyan, als Druckdichte des dritten unifarbenen Teststreifens 103 bestimmt. Für den vierten unifarbenen Teststreifen der ersten Testfarbe 104 wird in Schritt i) beispielsweise die zum Drucken der Testfarbe vorgesehene Druckdichte aller Druckfarbkanäle ermittelt und in Schritt ii) als Druckdichte des unifarbenen Teststreifens bestimmt. In anderen Worten wird nach dem vorliegenden Beispiel die Druckdichte der Testfarbe aus 5% Cyan, 7% Magenta, 4% Gelb und 16% Schwarz als Druckdichte des vierten unifarbenen Teststreifens 104 bestimmt.

Weiter kann in Schritt c) das digitale Testbild 100 auch mit unifarbenen Teststreifen für weitere Testfarben versehen werden. Beispielsweise kann das digitale Testbild 100 einen fünften unifarbenen Teststreifen 110 aufweisen, wobei für den fünften unifarbenen Teststreifen 110 in Schritt i) beispielswese die zum Drucken der zweiten Testfarbe vorgesehene Druckdichte aller Druckfarbkanäle ermittelt wird und in Schritt ii) als Druckdichte des fünften unifarbenen Teststreifens 110 festgelegt wird. In anderen Worten wird nach dem vorliegenden Beispiel also die Druckdichte des fünften Teststreifens 110 bestimmt als 8% Cyan, 3% Magenta, 5% Gelb und 12% Schwarz.

In Schritt d) wird nun das digitale Testbild 100 mit dem Digitaldrucker gedruckt. Dabei wird das digitale Testbild 100 beispielsweise auf ein Paneel von dem Typ gedruckt welcher auch später zum bedrucken mit dem Dekor vorgesehen ist.

In Schritt e) werden nun die Farbwerte des gedruckten Testbildes 100 mit einem optischen Farbmessgerät in Abhängigkeit ihrer Position in Richtung der Druckbreite erfasst. Es wird also beispielsweise mit dem Farbmessgerät das gedruckte Testbild 100 abgefahren und es werden Schwankungen in der Farbe der unifarbenen Teststreifen entlang der Druckbreite ermittelt.

In Schritt f) werden nun Korrekturdaten für den Digitaldrucker anhand der Farbwerte erstellt und anschließend in Schritt g) auf den Digitaldrucker und/oder das vorgegebene Digitalbild angewendet. Beispielsweise werden Korrekturdaten erstellt, die vorsehen, dass entlang der Druckbreite an bestimmten Stellen für bestimmte Druckfarben eine höhere Druckdichte eines bestimmten Druckfarbkanals vorgesehen sein muss. Diese Daten können dann beispielsweise durch Einstellen der Druckköpfe entlang der Druckbreite oder durch Verändern des vorgegebenen Digitalbildes angewendet werden.

Nach einem optional iterativen Anwenden der Verfahrensschritte d) bis g) werden die Korrekturdaten auf den Digitaldrucker und/oder das vorgegebene Digitalbild angewendet und das vorgegebene Digitalbild kann mit der Farbkorrektur gedruckt werden. Im Ergebnis weist der Druck dann insbesondere bei unifarbenen Dekoren wie Steindekoren eine reduzierte Streifenbildung in Druckrichtung auf.

## Patentansprüche

1. Verfahren zur Farbkorrektur eines Digitaldruckers über eine Druckbreite des Digitaldruckers, wobei der Digitaldrucker zur Ausgabe eines vorgegebenen Digitalbildes vorgesehen ist, wobei das Verfahren die Schritte aufweist:
a) Bereitstellen des vorgegebenen Digitalbildes, wobei das Digitalbild zumindest ein Farbkanalbild aufweist, wobei jedes Farbkanalbild einem Druckfarbkanal des Digitaldruckers zugeordnet ist;
b) Bestimmen von zumindest einer Testfarbe des vorgegebenen Digitalbildes, wobei die Testfarbe ausgewählt ist aus den am häufigsten im vorgegebenen Digitalbild vorkommenden Farben, wobei optional zwischen mehreren Testfarben ein Mindestabstand im Farbraum eingehalten wird;
c) Erstellen eines digitalen Testbildes, wobei das digitale Testbild mit zumindest einem unifarbenen Teststreifen versehen wird, der sich quer zur Druckrichtung des Digitaldruckers erstreckt und über die Druckbreite des Digitaldruckers gedruckt wird, wobei jeder unifarbene Teststreifen über eine Druckdichte von zumindest einem Druckfarbkanal des Digitaldruckers nach folgenden Schritten definiert wird:
i) Ermitteln einer zum Drucken der Testfarbe vorgesehenen Druckdichte von zumindest einem Druckfarbkanal des Digitaldruckers, und
ii) Bestimmen der in Schritt i) ermittelten Druckdichte als Druckdichte des unifarbenen Teststreifens;
d) Drucken des digitalen Testbildes mit dem Digitaldrucker;
e) Erfassen der Farbwerte des gedruckten Testbildes in Abhängigkeit ihrer Position in Richtung der Druckbreite mit einem optischen Farbmessgerät;
f) Erstellen von Korrekturdaten für den Digitaldrucker anhand der erfassten Farbwerte; und
g) Anwenden der Korrekturdaten auf den Digitaldrucker und/oder das vorgegebene Digitalbild, **dadurch gekennzeichnet, dass** zumindest ein unifarbener Teststreifen über die Druckdichte aller Druckfarbkanäle des Digitaldruckers definiert ist, wobei in Schritt i) die zum Drucken der Testfarbe vorgesehene Druckdichte aller Druckfarbkanäle des Digitaldruckers ermittelt wird; und/oder
zumindest ein unifarbener Teststreifen über die Druckdichte von einem einzelnen Druckfarbkanal des Digitaldruckers definiert ist, wobei in Schritt i) die zum Drucken der Testfarbe vorgesehene Druckdichte von einem einzelnen Druckfarbkanal des Digitaldruckers ermittelt wird; und/oder
zumindest ein unifarbener Teststreifen über die Druckdichte von mehr als einem und weniger als allen Druckfarbkanälen des Digitaldruckers definiert ist, wobei in Schritt i) die zum Drucken der Testfarbe vorgesehene Druckdichte von mehr als einem und weniger als allen Druckfarbkanälen des Digitaldruckers ermittelt wird, .

2. Verfahren nach einem der Ansprüche 1 oder 2, wobei in Schritt b) mehr als eine Testfarbe bestimmt wird und das digitale Testbild für jede bestimmte Testfarbe mit zumindest einem unifarbenen Teststreifen versehen wird.

3. Verfahren nach einem der Ansprüche 1 und 2, wobei das digitale Testbild für zumindest eine Testfarbe des vorgegebenen Digitalbildes mit zumindest zwei unifarbene Teststreifen versehen wird und bevorzugt die Anzahl der unifarbenen Teststreifen für die zumindest eine Testfarbe des vorgegebenen Digitalbildes kleiner oder gleich der Anzahl der Farbkanäle des Digitaldruckers ist,
wobei bevorzugt für die zumindest eine Testfarbe ein unifarbener Teststreifen über die Druckdichte von einem einzelnen Druckfarbkanal des Digitaldruckers definiert ist, ein unifarbener Teststreifen über die Druckdichte aller Druckfarbkanäle des Digitaldruckers definiert ist, und die optional restlichen unifarbenen Testreifen über die Druckdichte von mehr als einem und weniger als allen Druckfarbkanälen des Digitaldruckers definiert sind.

4. Verfahren nach Anspruch 3, wobei die Farbkanäle des Digitaldruckers eine Druckreihenfolge aufweisen, wobei der unifarbene Teststreifen, der über die Druckdichte von einem einzelnen Druckfarbkanal des Digitaldruckers definiert ist, über die Druckdichte des nach der Druckreihenfolge zuerst zu druckenden Druckfarbkanals definiert ist.

5. Verfahren nach Anspruch 4, wobei die unifarbenen Testreifen, die über die Druckdichte von mehr als einem und weniger als allen Druckfarbkanälen des Digitaldruckers definiert sind, so ausgewählt sind, dass
ein erster dieser unifarbenen Teststreifen über die Druckdichte des nach der Druckreihenfolge zuerst zu druckenden Druckfarbkanals definiert ist und zusätzlich über die Druckdichte des nach der Druckreihenfolge als nächstes zu druckenden Druckfarbkanals,
und optional jeder weitere dieser unifarbenen Teststreifen über die Druckdichte des jeweils vorherigen unifarbenen Testreifens definiert ist und zusätzlich über die Druckdichte des nach der Druckreihenfolge als nächstes zu druckenden Druckfarbkanals.

6. Verfahren nach einem der Ansprüche 1 bis 5, wobei die Schritte d) bis g) iterativ mehrfach nacheinander durchgeführt werden.

7. Verfahren nach einem der Ansprüche 1 bis 6, wobei das optische Farbmessgerät ausgewählt ist aus der Gruppe bestehend aus einem Farbsensor, einem Kolorimeter, einem Spektralphotometer, einer Digitalkamera oder einem Spektraldensitometer, wobei das optische Farbmessgerät vorzugsweise auf dem gleichen Farbmodell wie der Digitaldrucker beruht.

8. Verfahren nach einem der Ansprüche 1 bis 7, wobei Schritt e) optional mehrfach hintereinander mit unterschiedlichen Einstellungen des optischen Farbmessgerätes durchgeführt wird, insbesondere bei verschiedenen Lichtverhältnissen und/oder Belichtungszeiten.

9. Verfahren nach einem der Ansprüche 1 bis 8, wobei in Schritt g) die Korrekturdaten auf den Drucker angewendet werden, wobei insbesondere die Korrektur über eine Anpassung der Druckkopfelektronik erfolgt.

10. Verfahren nach einem der Ansprüche 1 bis 9, wobei in Schritt g) die Korrekturdaten auf das vorgegebene Digitalbild angewendet werden, wobei insbesondere die Korrektur über eine Anpassung von Druckpunkten der Farbkanalbilder des vorgegebenen Digitalbildes erfolgt.

11. Verfahren nach einem der Ansprüche 1 bis 10, wobei das Farbmodell des vorgesehenen Digitalbildes ausgewählt ist aus RGB, CMY und CMYK, wobei das Farbmodell insbesondere CMYK ist.

## Claims

1. Method for color correcting a digital printer over a printing width of the digital printer, wherein the digital printer is provided for outputting a specified digital image, wherein the method comprises the steps of:
a) providing the specified digital image, wherein the digital image comprises at least one color channel pattern, wherein each color channel pattern is associated with a print color channel of the digital printer;
b) determining at least one test color of the specified digital image, where the test color is selected from the most frequently occurring colors in the given digital image, optionally maintaining a minimum distance in the color space between several test colors;
c) creating a digital test pattern, wherein the digital test pattern is provided with at least one single-colored test stripe which extents crosswise to the printing direction of the digital printer and is printed over the printing width of the digital printer, wherein each single-colored test stripe is defined by a print density of at least one print color channel of the digital printer according to the following steps:
i) determining a print density of at least one print color channel of the digital printer intended for printing the test color; and
ii) specifying the print density determined in step i) as the print density of the single-colored test stripe;
d) printing the digital test pattern by use of the digital printer;
e) detecting the color values of the printed test image as a function of their position in the direction of the printing width by use of an optical color measuring device;
f) creating correction data for the digital printer based on the detected color values; and
g) applying the correction data to the digital printer and/or the specified digital image, **characterized in that**
at least one single-colored test stripe is defined by the print density of all print color channels of the digital printer, wherein in step i) the print density of all print color channels of the digital printer intended for printing the test color is determined, and/or
at least one single-colored test stripe is defined by the print density of a single print color channel of the digital printer, wherein in step i) the print density intended for printing the test color is determined from a single print color channel of the digital printer, and/or
at least one single-colored test stripe is defined by the print density of more than one and less than all print color channels of the digital printer, wherein the print density of more than one and less than all print color channels of the digital printer intended for printing the test color is determined in step i).

2. Method according to claim 1, wherein in step b) more than one test color is determined and the digital test pattern is provided with at least one single-colored test stripe for each determined test color.

3. Method according to any one of claims 1 or 2, wherein the digital test pattern for at least one test color of the specified digital image is provided with at least two single-colored test stripes and preferably the number of single-colored test stripes for the at least one test color of the specified digital image is less than or equal to the number of color channels of the digital printer,
wherein preferably for the at least one test color one single-colored test stripe is defined by the print density from a single print color channel of the digital printer, one single-colored test stripe is defined by the print density of all print color channels of the digital printer, and the optionally remaining single-colored test stripes are defined by the print density of more than one and less than all print color channels of the digital printer.

4. Method according to claim 3, wherein the color channels of the digital printer have a printing sequence, wherein the single-colored test stripe defined by the print density of a single print color channel of the digital printer is defined by the print density of the print color channel to be printed first according to the printing sequence.

5. Method according to claim 4, wherein the single-colored test stripes defined by the print density of more than one and less than all of the print color channels of the digital printer are selected such that
a first of said single-colored test stripes is defined by the print density of the print color channel to be printed first according to the printing sequence and is additionally defined by the print density of the print color channel to be printed subsequently according to the printing sequence; and
optionally each further of said single-colored test stripes is defined by the print density of the respective previous single-colored test stripe and additionally by the print density of the print color channel to be printed subsequently according to the printing sequence.

6. Method according to any one of claims 1 to 5, wherein steps d) to g) are carried out iteratively several times in succession.

7. Method according to any one of claims 1 to 6, wherein the optical color measuring device is selected from the group consisting of a color sensor, a colorimeter, a spectrophotometer, a digital camera and a spectral densitometer, wherein the optical color measuring device is preferably based on the same color model as the digital printer.

8. Method according to any one of claims 1 to 7, wherein step e) is optionally carried out several times in succession with different settings of the optical color measuring device, in particular under different lighting conditions and/or exposure times.

9. Method according to any one of claims 1 to 8, wherein in step g) the correction data are applied to the printer, wherein in particular the correction is carried out by adjusting the print head electronics.

10. Method according to any one of claims 1 to 9, wherein in step g) the correction data are applied to the specified digital image, wherein in particular the correction is made by adjusting print dots of the color channel patterns of the specified digital image.

11. Method according to any one of claims 1 to 10, wherein the color model of the intended digital image is selected from RGB, CMY and CMYK, wherein the color model is in particular CMYK.

## Revendications

1. Procédé de correction des couleurs d'une imprimante numérique sur toute la largeur d'impression de l'imprimante numérique, l'imprimante numérique étant prévue pour délivrer une image numérique prédéterminée, le procédé comprenant les étapes consistant à:
a) fournir l'image numérique prédéterminée, l'image numérique comprenant au moins une image de canal de couleur, chaque image de canal de couleur étant associée à un canal de couleur d'impression de l'imprimante numérique ;
b) déterminer au moins une couleur de test de l'image numérique prédéfinie, la couleur de test étant choisie parmi les couleurs apparaissant le plus souvent dans l'image numérique prédéfinie, une distance minimale étant éventuellement respectée dans l'espace chromatique entre plusieurs couleurs de test ;
c) créer une image de test numérique, l'image de test numérique étant pourvue d'au moins une bande de test de couleur unie qui s'étend perpendiculairement à la direction d'impression de l'imprimante numérique et qui est imprimée sur toute la largeur d'impression de l'imprimante numérique, chaque bande de test de couleur unie étant définie par une densité d'impression d'au moins un canal de couleur d'impression de l'imprimante numérique selon les étapes suivantes :
i) détermination d'une densité d'impression prévue pour l'impression de la couleur de test d'au moins un canal de couleur d'impression de l'imprimante numérique, et
ii) détermination de la densité d'impression déterminée à l'étape i) comme étant la densité d'impression de la bande de test de couleur unie ;
d) imprimer l'image de test numérique avec l'imprimante numérique ;
e) détecter les valeurs chromatiques de l'image de test imprimée en fonction de leur position dans le sens de la largeur d'impression à l'aide d'un colorimètre optique ;
f) créer des données de correction pour l'imprimante numérique à l'aide des valeurs chromatiques ; et
g) appliquer des données de correction à l'imprimante numérique et/ou à l'image numérique prédéterminée, **caractérisé en ce qu'**au moins une bande de test de couleur unie est définie par la densité d'impression de tous les canaux de couleur d'impression de l'imprimante numérique, la densité d'impression de tous les canaux de couleur d'impression de l'imprimante numérique prévue pour l'impression de la couleur de test étant déterminée à l'étape i) ; et/ou
au moins une bande de test de couleur unie est définie par la densité d'impression d'un canal de couleur d'impression individuel de l'imprimante numérique, la densité d'impression prévue pour l'impression de la couleur de test d'un canal de couleur d'impression individuel de l'imprimante numérique étant déterminée à l'étape i) ; et/ou
au moins une bande de test de couleur unie est définie par la densité d'impression de plus d'un et de moins de tous les canaux de couleur d'impression de l'imprimante numérique, la densité d'impression de plus d'un et de moins de tous les canaux de couleur d'impression de l'imprimante numérique, prévue pour l'impression de la couleur de test, étant déterminée à l'étape i).

2. Procédé selon l'une des revendications 1 ou 2, dans lequel, à l'étape b), on détermine plus d'une couleur de test et, pour chaque couleur de test déterminée, on munit l'image de test numérique d'au moins une bande de test de couleur unie.

3. Procédé selon l'une des revendications 1 et 2, dans lequel l'image de test numérique pour au moins une couleur de test de l'image numérique prédéterminée est pourvue d'au moins deux bandes de test de couleur unie et, de préférence, le nombre de bandes de test de couleur unie pour la au moins une couleur de test de l'image numérique prédéterminée est inférieur ou égal au nombre de canaux de couleur de l'imprimante numérique,
dans lequel, de préférence, pour ladite une couleur de test minimum, une bande de test de couleur unie est définie par la densité d'impression d'un seul canal de couleur d'impression de l'imprimante numérique, une bande de test de couleur unie est définie par la densité d'impression de tous les canaux de couleur d'impression de l'imprimante numérique, et les bandes de test de couleur unie éventuellement restantes sont définies par la densité d'impression de plus d'un et de moins que tous les canaux de couleur d'impression de l'imprimante numérique.

4. Procédé selon la revendication 3, dans lequel les canaux de couleur de l'imprimante numérique présentent un ordre d'impression, la bande de test de couleur unie définie par la densité d'impression d'un seul canal de couleur d'impression de l'imprimante numérique étant définie par la densité d'impression du canal de couleur d'impression à imprimer en premier selon l'ordre d'impression.

5. Procédé selon la revendication 4, dans lequel les bandes de test de couleur unie définies par la densité d'impression de plus d'un et de moins de tous les canaux de couleur d'impression de l'imprimante numérique sont choisies de telle sorte que
une première de ces bandes de test de couleur unie est définie par la densité d'impression du canal de couleur d'impression à imprimer en premier selon l'ordre d'impression et en plus par la densité d'impression du canal de couleur d'impression à imprimer ensuite selon l'ordre d'impression,
et, en option, chacune des autres bandes de test de couleur de couleur unie est définie par la densité d'impression de la bande de test de couleur unie précédente respective et, en outre, par la densité d'impression du canal de couleur d'impression à imprimer ensuite selon l'ordre d'impression.

6. Procédé selon l'une des revendications 1 à 5, dans lequel les étapes d) à g) sont exécutées plusieurs fois successivement de manière itérative.

7. Procédé selon l'une des revendications 1 à 6, dans lequel l'appareil de mesure optique des couleurs est choisi dans le groupe constitué par un capteur de couleurs, un colorimètre, un spectrophotomètre, une caméra numérique ou un spectrodensitomètre, l'appareil de mesure optique des couleurs étant de préférence basé sur le même modèle de couleurs que l'imprimante numérique.

8. Procédé selon l'une des revendications 1 à 7, dans lequel l'étape e) est éventuellement réalisée plusieurs fois de suite avec différents réglages de l'appareil de mesure optique des couleurs, en particulier dans différentes conditions d'éclairage et/ou de temps d'exposition.

9. Procédé selon l'une des revendications 1 à 8, dans lequel, à l'étape g), les données de correction sont appliquées à l'imprimante, la correction étant notamment réalisée par une adaptation de l'électronique de la tête d'impression.

10. Procédé selon l'une des revendications 1 à 9, dans lequel, à l'étape g), les données de correction sont appliquées à l'image numérique prédéterminée, la correction s'effectuant notamment par une adaptation des points de pression des images des canaux de couleur d'impression de l'image numérique prédéterminée.

11. Procédé selon l'une quelconque des revendications 1 à 10, dans lequel le modèle de couleurs de l'image numérique prédéterminée est choisi parmi RGB, CMY et CMYK, le modèle de couleurs étant en particulier CMYK.
